(19) Europäisches Patentamt
European Patent Office
Office européen des brevets

(11) **EP 4 746 326 A1**

(12) **EUROPEAN PATENT APPLICATION**
published in accordance with Art. 153(4) EPC

(43) Date of publication:
**20.05.2026 Bulletin 2026/21**

(21) Application number: **23944705.5**

(22) Date of filing: **12.07.2023**

(51) International Patent Classification (IPC):
*H04L 5/00* (2006.01)

(52) Cooperative Patent Classification (CPC):
**H04L 5/00**

(86) International application number:
**PCT/CN2023/107088**

(87) International publication number:
**WO 2025/010685 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LIANG, Bin**
  **Dongguan, Guangdong 523860 (CN)**
• **XU, Jing**
  **Dongguan, Guangdong 523860 (CN)**
• **LIN, Yanan**
  **Dongguan, Guangdong 523860 (CN)**

(74) Representative: **Mewburn Ellis LLP
Aurora Building
Counterslip
Bristol BS1 6BX (GB)**

(54) **SENSING SIGNAL CONFIGURATION METHOD AND APPARATUS, SENSING SIGNAL TRANSMISSION METHOD AND APPARATUS, AND DEVICE AND STORAGE MEDIUM**

(57) A sensing signal configuration method and apparatus, a sensing signal transmission method and apparatus, and a device and a storage medium, which relate to the technical field of communications. The sensing signal configuration method comprises: a first node transmitting configuration information, wherein the configuration information is used for configuring a first parameter, and the first parameter comprises at least one of the following parameters: a time interval of sensing signals, the number of sensing signals, and an interval of sensing signal (410). At least one parameter such as a time interval, the number and a period of sensing signals, is configured, such that a node in a sensing system transmits and/or receives the sensing signals according to the parameter, which allows different sensing requirements to be satisfied.

410

A first node transmits configuration information, where the configuration information is used for configuring a first parameter, and the first parameter includes at least one of the following parameters: a time interval of sensing signals, a quantity of the sensing signals, or a period between the sensing signals

FIG. 4

**Description**

## TECHNICAL FIELD

Embodiments of the present disclosure relate to the field of communication technology, and in particular, to a sensing signal configuration method, a sensing signal transmission method, apparatuses, a device, and a storage medium.

## BACKGROUND

Integrated sensing and communication refers to the integration of communication and sensing functions, so that future communication systems have both communication and sensing functions.

It is considered that there are different sensing requirements in different sensing application scenarios. Considering application scenarios of velocity sensing as an example, some scenarios require higher sensing accuracy, such as velocity sensing accuracy of 1 meter/second (m/s), while some scenarios require lower sensing accuracy, such as only velocity sensing accuracy value of 10 m/s. Alternatively, some scenarios require a larger sensing interval, such as a velocity sensing interval of [-15 m/s, 15 m/s), while some scenarios require a smaller sensing interval, such as only a velocity sensing interval of [-1.5 m/s, 1.5 m/s).

Further research is needed on how participating nodes in a sensing system configure and transmit sensing signals for different sensing requirements.

## SUMMARY

The embodiments of the present disclosure provide a sensing signal configuration method, a sensing signal transmission method, apparatuses, a device, and a storage medium. The technical solutions are as follows.

According to an aspect of the embodiments of the present disclosure, a sensing signal configuration method is provided, the method is performed by a first node, and the method includes:

transmitting configuration information, where the configuration information is used for configuring a first parameter, and the first parameter includes at least one of the following parameters: a time interval of sensing signals, a quantity of the sensing signals, or a period between the sensing signals.

According to an aspect of the embodiments of the present disclosure, a sensing signal transmission method is provided, the method is performed by a second node, and the method includes:

transmitting and/or receiving sensing signals based on a first parameter, where the first parameter includes at least one of the following parameters: a time interval of sensing signals, a quantity of the sensing signals, or a period between the sensing signals.

According to an aspect of the embodiments of the present disclosure, a sensing signal configuration apparatus is provided, and the apparatus includes:

a transmitting module, configured to transmit configuration information, where the configuration information is used for configuring a first parameter, and the first parameter includes at least one of the following parameters: a time interval of sensing signals, a quantity of the sensing signals, or a period between the sensing signals.

According to an aspect of the embodiments of the present disclosure, a sensing signal transmission apparatus is provided, and the apparatus includes:

a transceiver module, configured to transmit and/or receive sensing signals based on a first parameter, where the first parameter includes at least one of the following parameters: a time interval of sensing signals, a quantity of the sensing signals, or a period between the sensing signals.

According to an aspect of the embodiments of the present disclosure, a device is provided. The device includes a processor and a memory, the memory has stored a computer program, and the processor performs the computer program to implement the sensing signal configuration method or the sensing signal transmission method.

According to an aspect of the embodiments of the present disclosure, a computer-readable storage medium is provided. The storage medium has stored a computer program, and the computer program is used for being executed by a processor to perform the sensing signal configuration method or the sensing signal transmission method.

According to an aspect of the embodiments of the present disclosure, a chip is provided. The chip includes a programmable logic circuit and/or program instructions. When the chip runs, the chip is configured to perform the sensing signal configuration method or the sensing signal transmission method.

According to an aspect of the embodiments of the present disclosure, a computer program product is provided. The computer program product includes computer instructions, the computer instructions are stored in a computer-readable storage medium, and a processor reads the computer instructions from the computer-readable storage medium and executes the computer instructions to perform the sensing signal configuration method or the sensing signal transmission method.

The technical solutions provided in the embodiments of the present disclosure can bring the following beneficial effects.

By configuring or protocol-specifying at least one parameter of the time interval of the sensing signals, the quantity of the sensing signals, or the period between the sensing signals, the node in the sensing system transmits and/or receives the sensing signals based on the above parameter, thereby satisfying different sensing requirements.

## BRIEF DESCRIPTION OF THE DRAWINGS

FIG. 1 is a schematic diagram of a network architecture provided in an embodiment of the present disclosure;
FIG. 2 is a schematic diagram of eight sensing modes provided in an embodiment of the present disclosure;
FIG. 3 is a schematic diagram of a sensing system including multiple sensing nodes provided in an embodiment of the present disclosure;
FIG. 4 is a flowchart of a sensing signal configuration method provided in an embodiment of the present disclosure;
FIG. 5 is a schematic diagram of a sensing signal configuration provided in an embodiment of the present disclosure;
FIG. 6 is a schematic diagram of a sensing signal configuration provided in another embodiment of the present disclosure;
FIG. 7 is a schematic diagram of a sensing signal configuration provided in yet another embodiment of the present disclosure;
FIG. 8 is a flowchart of a sensing signal transmission method provided in an embodiment of the present disclosure;
FIG. 9 is a flowchart of a sensing signal configuration and transmission method provided in an embodiment of the present disclosure;
FIG. 10 is a block diagram of a sensing signal configuration apparatus provided in an embodiment of the present disclosure;
FIG. 11 is a block diagram of a sensing signal transmission apparatus provided in an embodiment of the present disclosure; and
FIG. 12 is a schematic structural diagram of a device provided in an embodiment of the present disclosure.

## DETAILED DESCRIPTION

To make the purposes, technical solutions and advantages of the present disclosure clearer, the implementations of the present disclosure will be further described in detail below with reference to the accompanying drawings.

The network architecture and service scenarios described in the embodiments of the present disclosure are intended to more clearly illustrate the technical solutions of the embodiments of the present disclosure, and do not constitute a limitation on the technical solutions provided in the embodiments of the present disclosure. A person skilled in the art will appreciate that, with the evolution of the network architecture and the emergence of new service scenarios, the technical solutions provided in the embodiments of the present disclosure are equally applicable to similar technical problems.

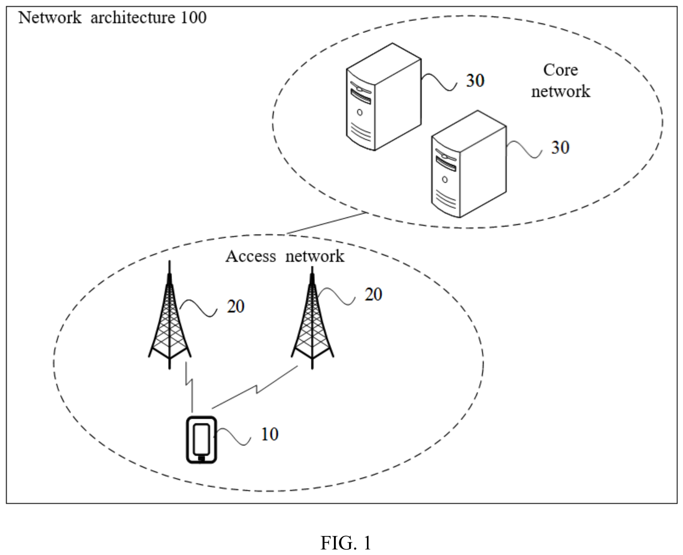

Referring to FIG. 1, FIG. 1 shows a schematic diagram of a network architecture 100 provided in an embodiment of the present disclosure. The network architecture 100 may include: a terminal device 10, access network devices 20 and core network elements 30.

The terminal device 10 may be referred to as a user equipment (UE), an access terminal, a user unit, a user station, a mobile station, a mobile platform, a remote station, a remote terminal, a mobile device, a wireless communication device, a user agent, or a user device. Optionally, the terminal device 10 may also be a cellular phone, a cordless phone, a session initiation protocol (SIP) phone, a wireless local loop (WLL) station, a personal digital assistant (PDA) device, a handheld device with a wireless communication function, a computing device or other processing devices connected to a wireless modem, a vehicle-mounted device, a wearable device, a terminal device in a 5th generation system (5GS) or a terminal device in a future evolved public land mobile network (PLMN), or the like, which will not be limited in the embodiments of the present disclosure. For the convenience of description, the devices mentioned above are collectively referred to as terminal devices. There are usually multiple terminal devices 10, and one or more terminal devices 10 may be distributed in a cell managed by each access network device 20. The terminal device may also be referred to as a terminal or UE for short, and those skilled in the art will understand its meaning.

The access network devices 20 are devices deployed in an access network to provide wireless communication functions for the terminal device 10. The access network devices 20 may include various forms of macro base stations, micro base stations, relay stations, access points, etc. In systems using different wireless access technologies, the name of the device with access network device function may vary, for example, in a 5G NR system, it is called gNodeB or gNB. As the communication technology evolves, the name "access network device" may change. For the convenience of description, in the embodiments of the present disclosure, the above-mentioned devices that provide wireless communication functions for the terminal device 10 are collectively referred to as access network devices. Optionally, a communication relationship may be established between the terminal device 10 and the core network element 30 through the access network device 20. For example, in a long term evolution (LTE) system, the access network device 20 may be an evolved universal terrestrial radio access network (EUTRAN) or one or more eNodeBs in the EUTRAN; in the 5G NR system, the access network device 20 may be a radio access network (RAN) or one or more gNBs in the RAN. In the embodiment of the present disclosure, unless otherwise specified, the "network device" refers to an access network device 20, such as a base station.

The core network elements 30 are network elements deployed in a core network. The functions of the core network element 30 are mainly to provide user connection, user management and service bearer, and to provide an interface to an external network as a bearer network. For example, the core network elements in the 5G NR system may include other network entities, such as an access and mobility management function (AMF) entity, a user plane function (UPF) entity, and a session management function (SMF) entity.

In some embodiments, the access network device 20 and the core network element 30 communicate with each other via a certain air interface technology, such as an NG interface in the 5G NR system. The access network device 20 and the terminal device 10 communicate with each other via a certain air interface technology, such as a Uu interface.

In the embodiments of the present disclosure, the "5G NR system" may also be referred to as a 5G system or an NR system, but those skilled in the art can understand its meaning. The technical solutions described in the embodiments of the present disclosure may be applicable to LTE systems, 5G NR systems, subsequent evolution systems of 5G NR systems (e.g., sixth generation mobile communication (6th generation (6G)) systems), and other communication systems such as narrow band internet of things (NB-IoT) systems, which will not be limited in the embodiments of the present disclosure.

In the embodiments of the present disclosure, the network device may provide a service for a cell, and the terminal device communicates with the network device via a transmission resource (such as a frequency-domain resource, or a spectrum resource) on the carrier used by the cell. The cell may be a cell corresponding to the network device (such as a base station). The cell may belong to a macro base station, or may belong to a base station corresponding to a small cell. The small cells may include: a metro cell, a micro cell, a pico cell, a femto cell, or the like. These small cells are applicable for providing data transmission services with high velocity due to their characteristics of small coverage and low transmit power.

Integrated sensing and communication refers to the integration of communication and sensing functions, so that future communication systems have both communication and sensing functions. When information is transmitted via a wireless channel, the system actively recognizes and analyzes channel characteristics to sense physical characteristics of the surrounding environment, thereby enhancing the communication and sensing functions. For example, by using base station signals to sense surrounding environment information and design communication links, obstacles may be avoided, and communication performance may be improved.

The next-generation network (such as 6G network) is expected to be a fusion of mobile communication network, sensing network and computing power network. In a narrow sense, the sensing network refers to a system with capabilities such as target positioning (ranging, velocity measurement, and angle measurement), target imaging, target detection, target tracking, and target recognition. In a broad sense, the sensing network refers to a system that has the attributes and states of all services, networks, users and terminals, as well as environmental objects. From the perspective of sensing applications, sensing may be classified into the following categories:

outdoor, wide-area or local-area applications, including: smart cities (e.g., weather monitoring), smart transportation/high-speed rail (e.g., high-precision map construction, road supervision, intrusion detection), and low-altitude applications (e.g., drone monitoring and obstacle avoidance, flight intrusion detection, and flight path management); and

indoor or local-area applications, including: smart home and health management (e.g., respiratory monitoring, intrusion detection, gesture/posture recognition, motion monitoring, mobile trajectory tracking), smart factories (e.g., intrusion detection, material detection, and object defect detection).

The above categories of sensing applications are merely exemplary, and the sensing application areas are not limited to the above examples.

Wireless communication and sensing are two important applications of modern radio frequency technology. Sensing detects parameters of physical environment by using radio waves, to implement environmental sensing such as target positioning, action recognition, and imaging. Traditional sensing is independent of wireless communication, and the separated design causes a waste of wireless spectrum and hardware resources. Entering the Beyond 5G (B5G) and 6G era, the communication spectrum has moved towards millimeter wave, terahertz, and visible light communication. The future wireless communication spectrum will overlap with the traditional sensing spectrum. The integrated sensing and communication technology integrates the two functions of wireless communication and sensing; therefore, the sensing function may be implemented by using wireless resources of the wireless communication; sensing services in a larger range may be implemented by using the widely deployed cellular networks; joint sensing may be performed by using a base station and multiple terminals, to implement higher sensing accuracy; and hardware modules of wireless communication may also be used to implement sensing functions, to reduce costs. To sum up, the integrated sensing and communication technology enables future wireless communication systems to have sensing capabilities, and provides a foundation for the development of future smart transportation, smart cities, smart factories, drones and other services.

The term "sensing" mentioned in the embodiments of the present disclosure refers to a process of directly or indirectly obtaining sensing information of a target or environment based on at least one type of sensing signals such as sound waves, electromagnetic waves, or light waves (including but not limited to lasers). For example, by transmitting and receiving sensing signals, and measuring the sensing signals or performing other processing methods on the sensing signals, sensing information of a sensing target or environment is obtained, realizing, for example, positioning, ranging, velocity measurement, angle measurement, target imaging, target detection, target tracking, target recognition, and other services.

In addition, the term "sensing" mentioned in the embodiments of the present disclosure may also be replaced by any other word that may express sensing-related meanings, such as positioning, ranging, velocity measurement, angle measurement, target imaging, target detection, target tracking and target recognition.

The nodes involved in sensing are as follows.

Sensing transmitting node: a node transmitting sensing signals.

Sensing receiving node: a node receiving sensing signals.

Sensing node: the sensing transmitting node and the sensing receiving node are collectively referred to as sensing nodes, i.e., nodes that perform sensing.

Sensing management node: a node manages and controls sensing tasks. The sensing management node configures the sensing tasks for the sensing nodes, and the sensing nodes perform sensing and then feed back sensing results to the sensing management node.

Sensing trigger node: a node initiates sensing, sets a configuration for a sensing scenario, and analyzes a sensing feedback transmitted by the sensing node.

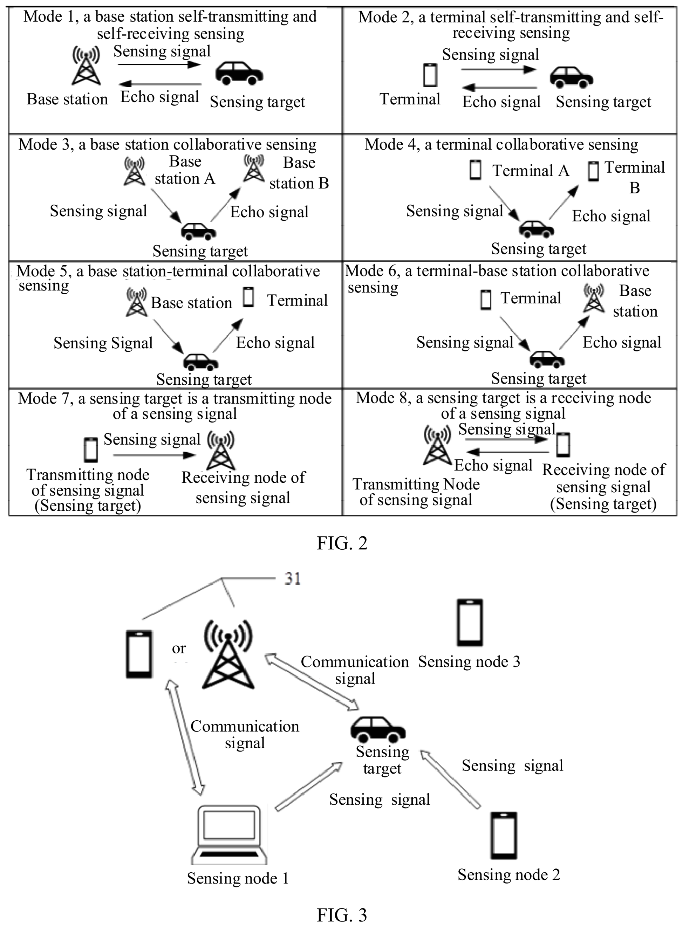

For sensing, there may be 8 modes as shown in FIG. 2.

Mode 1 is a base station self-transmitting and self-receiving sensing. A base station transmits a sensing signal and receives an echo signal. In Mode 1, the sensing transmitting node and the sensing receiving node are the same base station. That is, the base station transmits a sensing signal to a sensing target, and after the sensing signal is reflected by the sensing target, the same base station receives an echo signal (i.e., the sensing signal after being reflected by the sensing target).

Mode 2 is a terminal self-transmitting and self-receiving sensing. A terminal transmits a sensing signal and receives an echo signal. In Mode 2, the sensing transmitting node and the sensing receiving node are the same terminal. That is, the terminal transmits a sensing signal to a sensing target, and after the sensing signal is reflected by the sensing target, the same terminal receives an echo signal.

Mode 3 is a base station collaborative sensing. A base station (e.g., base station A in FIG. 2) transmits a sensing signal, and another base station (e.g., base station B in FIG. 2) receives an echo signal. In Mode 3, the sensing transmitting node and the sensing receiving node are different base stations. That is, the base station transmits a sensing signal to a sensing target, and after the sensing signal is reflected by the sensing target, the another base station receives an echo signal.

Mode 4 is a terminal collaborative sensing. A terminal (e.g., terminal A in FIG. 2) transmits a sensing signal, and another terminal (e.g., terminal B in FIG. 2) receives an echo signal. In Mode 4, the sensing transmitting node and the sensing receiving node are different terminals. That is, the terminal transmits a sensing signal to a sensing target, and after the sensing signal is reflected by the sensing target, the another terminal receives an echo signal.

Mode 5 is a base station-terminal collaborative sensing. A base station transmits a sensing signal and a terminal receives an echo signal. In Mode 5, the sensing transmitting node is the base station, and the sensing receiving node is the terminal. That is, the base station transmits a sensing signal to a sensing target, and after the sensing signal is reflected by the sensing target, the terminal receives an echo signal.

Mode 6 is a terminal-base station collaborative sensing. A terminal transmits a sensing signal and a base station receives an echo signal. In Mode 6, the sensing transmitting node is the terminal, and the sensing receiving node is the base station. That is, the terminal transmits a sensing signal to a sensing target, and after the sensing signal is reflected by the sensing target, the base station receives an echo signal.

Mode 7 is that a sensing target is a transmitting node of a sensing signal. In Mode 7, the sensing transmitting node is a terminal, and the sensing receiving node is a base station. Since the sensing target (e.g., terminal) is the sensing transmitting node, the sensing signal is transmitted from the sensing transmitting node (e.g., the terminal) to the sensing receiving node (e.g., the base station) without reflection, and may be directly analyzed by the base station after being received.

Mode 8 is that a sensing target is a receiving node of a sensing signal. In Mode 8, the sensing transmitting node is a base station, and the sensing receiving node is a terminal. Since the sensing target (e.g., the terminal) is the sensing receiving node, the terminal needs to feed back a sensing result to the base station after receiving the sensing signal, and the base station obtains the sensing result.

The transmitting node and the receiving node of the sensing signal may be collectively referred to as sensing nodes. In the above eight sensing modes, only one sensing node or a pair of sensing nodes exists. In the wireless communication systems, there are a large quantity of terminal devices (e.g., mobile phones and IoT devices). When there are multiple sensing nodes (i.e., base stations, mobile phones, and IoT devices, being capable of transmitting and/or receiving sensing signals) around a sensed object, the multiple sensing nodes participate in sensing together, thereby improving the accuracy of sensing, satisfying more complex sensing service requirements, and providing richer sensing services. As shown in FIG. 3, when multiple sensing nodes (e.g., sensing node 1, sensing node 2, and sensing node 3 in FIG. 3) exist in a system, there may be a sensing control node 31 to control and manage all sensing services to improve efficiency. The sensing control node 31 may be a base station, a terminal device, or a core network element.

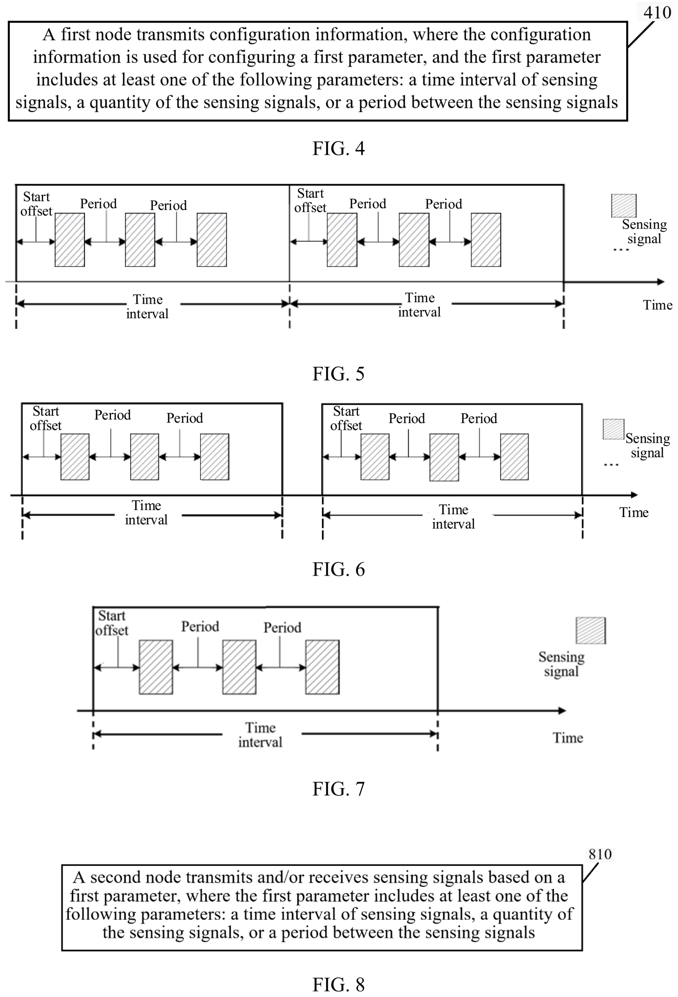

Referring to FIG. 4, FIG. 4 shows a flowchart of a sensing signal configuration method provided in an embodiment of the present disclosure. The method may include the following step 410.

In step 410, a first node transmits configuration information, where the configuration information is used for configuring a first parameter, and the first parameter includes at least one of the following parameters: a time interval of sensing signals, a quantity of the sensing signals, or a period between the sensing signals.

In some embodiments, the first node is used for configuring the sensing signals. The first node transmits the configuration information, and the configuration information is used for configuring the first parameter related to the sensing signals. For example, the configuration information is used for configuring the first parameter related to transmission and/or reception of the sensing signals.

In some embodiments, the first node may be any one of: an access network device (e.g., a base station), a terminal device, a server, a core network element, or a sensing information collector. In the embodiments of the present disclosure, there is no limitation on the specific device used to implement the first node. For example, for the sensing system shown in FIG. 3, the first node may be the sensing control node.

In some embodiments, the sensing signal may be a specific reference signal, such as a channel state information reference signal (CSI-RS), a phase-tracking reference signal (PT-RS), a demodulation reference signal (DMRS), a sounding reference signal (SRS), or a positioning reference signal (PRS). Alternatively, the sensing signal may be a data signal. In the embodiments of the present disclosure, there is no limitation on the specific type of the sensing signal, which may be determined according to actual situations without specific requirements.

In some embodiments, the time interval of the sensing signals is used for transmitting and/or receiving the sensing signals. For example, in a case where the configuration information is configured for a transmitting node of the sensing signals, the time interval of the sensing signals may be a transmission time interval of the sensing signals, which is used for transmitting the sensing signals within the time interval. For example, in a case where the configuration information is configured for a receiving node of the sensing signals, the time interval of the sensing signals may be a reception time interval of the sensing signals, which is used for receiving the sensing signals within the time interval. For example, in a case where the configuration information is configured for a transmitting node and a receiving node of the sensing signals, or for the self-transmitting and self-receiving sensing mode introduced above, the time interval of the sensing signals may include a transmission time interval of the sensing signals and a reception time interval of the sensing signals. The transmission time interval of the sensing signals is used for transmitting the sensing signals within the time interval, and the reception time interval of the sensing signals is used for receiving the sensing signals within the time interval. Optionally, the transmission time interval of the sensing signals and the reception time interval of the sensing signals may be the same or different.

In some embodiments, in a case where the first parameter includes the time interval of the sensing signals, the configuration information may configure one time interval of the sensing signals, or may configure multiple time intervals of the sensing signals. For example, the configuration information is used for configuring one or more transmission time intervals of the sensing signals. For example, the configuration information is used for configuring one or more reception time intervals of the sensing signals. For example, the configuration information is used for configuring at least one group of corresponding transmission time interval and reception time interval of the sensing signals, and each group of corresponding transmission time interval and reception time interval includes one transmission time interval and one reception time interval. For example, in a case where transmission and reception share a same time interval, the configuration information is used for configuring one or more time intervals of the sensing signals, and the time interval is used for transmitting and receiving the sensing signals.

In some embodiments, all or part of time-domain resources within the time interval of the sensing signals are used for transmitting and/or receiving the sensing signals. For example, all or part of time-domain resources within the transmission time interval of the sensing signals are used for transmitting the sensing signals. For example, all or part of time-domain resources within the reception time interval of the sensing signals are used for receiving the sensing signals. For example, in a case where transmission and reception share a same time interval, all or part of the time-domain resources within the time interval of the sensing signals are used for transmitting and receiving the sensing signals. For example, in a case where transmission and reception share a same time interval, a first part of the time-domain resources within the time interval of the sensing signals is used for transmitting the sensing signals, and a second part of the time-domain resources is used for receiving the sensing signals; and the first part of the time-domain resources and the second part of the time-domain resources may overlap in a time domain (including full or partial overlap), or may not overlap.

In some embodiments, the time intervals are periodic. For example, as shown in FIG. 5, the time intervals are periodic, and there is no time gap between two adjacent time intervals in the time domain. For example, as shown in FIG. 6, the time intervals are periodic, and there is a time gap between two adjacent time intervals in the time domain.

In some embodiments, the time interval is non-periodic. In other words, only one time interval is configured. For example, as shown in FIG. 7, the time interval is non-periodic, and only one time interval is configured.

In some embodiments, whether the time interval is periodic or non-periodic may be specified by a protocol or may be configured via the configuration information. In some embodiments, in a case where the time intervals are periodic, whether there is a time gap between two adjacent time intervals in the time domain and a length of the time gap may also be specified by the protocol or configured via the configuration information.

In some embodiments, the time interval includes one or more time-domain units. In some embodiments, the time-domain unit is any one of: a symbol, a slot, a frame, a sub-frame, a millisecond (ms), or a second (s). The above description of the time-domain unit is merely exemplary, the present disclosure is not limited thereto, and other time-domain units may also be used. In addition, the symbol may be an orthogonal frequency division multiplexing (OFDM) symbol, a frequency modulated continuous wave (FMCW), an orthogonal time frequency space (OTFS) symbol, etc., which will not be limited in the present disclosure.

In some embodiments, the time interval is determined based on at least two of the following parameters: a start time-domain unit of the time interval, an end time-domain unit of the time interval, and a duration of the time interval. The start time-domain unit of the time interval refers to a first time-domain unit occupied by the time interval, that is, an earliest time-domain unit occupied by the time interval in the time domain. The end time-domain unit of the time interval refers to a last time-domain unit occupied by the time interval, that is, a latest time-domain unit in the time domain occupied by the time interval. For example, the time interval may be determined based on the start time-domain unit and the end time-domain unit of the time interval. For example, the time interval may be determined based on the start time-domain unit and the duration of the time interval. For example, the time interval may be determined based on the end time-domain unit and the duration of the time interval.

In some embodiments, the configuration information is further used for configuring a time offset of a first sensing signal within the time interval. Alternatively, in addition to the at least two parameters of the start time-domain unit of the time interval, the end time-domain unit of the time interval, and the duration of the time interval, configuration parameters of the time interval further include the time offset of the first sensing signal. For example, the time offset of the first sensing signal refers to an offset value of a start time-domain unit of the first sensing signal transmitted or received within the time interval relative to the start time-domain unit of the time interval. In some embodiments, if the time offset of the first sensing signal is configured, the sensing signal may be transmitted and/or received starting from a position of the time offset of the first sensing signal within the time interval. If the time offset of the first sensing signal is not configured, the sensing signal may be received starting from the start time-domain unit of the time interval, or starting from a time-domain unit in which activation signaling is received, or starting from a start time indicated by the activation signaling.

In some embodiments, the quantity of the sensing signals includes: a quantity of sensing signals transmitted in a time interval, and/or a quantity of sensing signals received in a time interval. For example, for the transmission time interval of the sensing signals, the quantity of the sensing signals refers to a quantity of sensing signals transmitted in a transmission time interval. For example, for the reception time interval of the sensing signals, the quantity of the sensing signals refers to a quantity of sensing signals received within a reception time interval. For example, in a case where transmission and reception share a same time interval, the quantity of the sensing signals may include a quantity of sensing signals transmitted within the time interval, and may also include a quantity of sensing signals received within the time interval; and the quantity of transmitted sensing signals and the quantity of received sensing signals may be the same or different. For example, as shown in FIG. 5, FIG. 6 or FIG. 7, within one time interval, the quantity of sensing signals is three.

In some embodiments, the period between the sensing signals refers to a time gap in the time domain. For example, the period between the transmitted sensing signals refers to a period between two adjacent transmitted sensing signals, e.g., a period between start time-domain units of the two adjacent transmitted sensing signals. The period between the sensing signals includes: a period between sensing signals transmitted within a time interval, and/or a period between sensing signals received within a time interval. For example, the period between the received sensing signals refers to a period between two adjacent received sensing signals, e.g., a period between start time-domain units of the two adjacent received sensing signals. For example, for the transmission time interval of the sensing signals, the period between the sensing signals refers to a period between sensing signals transmitted within a transmission time interval. For example, for the reception time interval of the sensing signals, the period between the sensing signals refers to a period between sensing signals received within a reception time interval. For example, in a case where transmission and reception share a same time interval, the period between the sensing signals may include a period between sensing signals transmitted within the time interval, and may also include a period between sensing signals received within the time interval; and the period between the transmitted sensing signals and the period between the received sensing signals may be the same or different. For example, as shown in FIG. 5, FIG. 6 or FIG. 7, within a time interval, there is a period between two adjacent sensing signals.

In some embodiments, the quantity of the sensing signals and the period between the sensing signals may not be limited to being within a time interval. For example, the quantity of the sensing signals refers to a quantity of transmitted sensing signals or a quantity of received sensing signals. For example, the period between the sensing signals refers to a time gap between two adjacent transmitted sensing signals, or a time gap between two adjacent received sensing signals. For example, the second node transmits and/or receives the sensing signal based on the above quantity and/or period, starting from a time-domain unit in which the configuration information is received, or starting from a time-domain unit in which activation signaling is received, or starting from a start time-domain unit indicated by the activation signaling.

In some embodiments, the period between the sensing signals may include one or more time-domain units. For example, the time-domain unit is any one of: a symbol, a slot, a frame, a sub-frame, a millisecond, a second, etc.

In some embodiments, within the time interval of the sensing signals, the sensing signals may be transmitted or received at equal intervals within the entire time interval, or the quantity of sensing signals may be limited so that the sensing signals are transmitted or received at equal intervals within a part of the time interval, and no sensing signal is transmitted or received in a remaining part of the time interval. For example, as shown in FIG. 5, FIG. 6 or FIG. 7, within a time interval, the quantity of sensing signals is three, and the three sensing signals are transmitted or received at equal intervals within a part of the time interval, and no sensing signal is transmitted or received in a remaining part of the time interval.

In some embodiments, the configuration information is used for configuring frequency-domain resources of the sensing signals. The frequency-domain resources are used for transmitting and/or receiving the sensing signals. For example, in a case where the configuration information is configured for a transmitting node of the sensing signals, the transmitting node may transmit the sensing signals on the frequency-domain resources. For example, in a case where the configuration information is configured for a receiving node of the sensing signals, the receiving node may detect or receive the sensing signals on the frequency-domain resources.

In some embodiments, the frequency-domain resources include one or more frequency-domain units. In some embodiments, the frequency-domain unit is any one of: a subcarrier, a resource block (RB), a sub-band, a bandwidth part (BWP), or a resource block group (RBG). The above description of the frequency-domain unit is merely exemplary, the present disclosure is not limited thereto, and other frequency-domain units may also be used.

In some embodiments, the frequency-domain resources are indicated by a bitmap, or the frequency-domain resources are determined based on a frequency-domain start position and a quantity of included frequency-domain units. For example, the bitmap may indicate one frequency-domain unit in a frequency domain or multiple continuous or non-continuous frequency-domain units in the frequency domain as frequency-domain resources of the sensing signals. For example, the frequency-domain start position and the quantity of included frequency-domain units may indicate one frequency-domain unit in the frequency domain or multiple continuous or non-continuous frequency-domain units in the frequency domain as frequency-domain resources of the sensing signals.

In some embodiments, the configuration information is used for configuring activation signaling of the sensing signals. The activation signaling is used for activating transmission and/or reception of the sensing signals. In some embodiments, the activation signaling is used for determining a start time-domain unit for transmitting and/or receiving the sensing signals. For example, the sensing signals are transmitted and/or received starting from a time-domain unit in which the activation signaling is received. For example, the sensing signals are transmitted and/or received starting from a start time-domain unit indicated by the activation signaling.

In some embodiments, within the time interval, the sensing signals satisfy at least one of the following conditions that: frequency-domain resources of the sensing signals are the same; spacings of the frequency-domain resources of the sensing signals are pre-configured or specified; frequency-domain spacings of the sensing signals are the same; time-domain spacings of the sensing signals are the same; or spatial parameters of the sensing signals are the same.

Within a time interval, the frequency-domain resources of the sensing signals may be the same or different. In different time intervals, the frequency-domain resources of the sensing signals may be the same or different. In a case where the frequency-domain resources of the sensing signals are the same, it is conducive to simplifying the configuration and simplifying the content of the configuration information. In addition, the frequency-domain resources of the sensing signals may be configured via the configuration information, or may be specified by the protocol.

Within a time interval, there may be or may not be spacings of the frequency-domain resources of the sensing signals. If there are spacings between the frequency-domain resources of the sensing signals within a time interval, the spacings may be pre-configured or specified. For example, the spacings are configured via the configuration information, or specified by the protocol.

Within a time interval, the frequency-domain spacings of the sensing signals may be the same or different. In different time intervals, the frequency-domain spacings of the sensing signals may be the same or different. In a case where the frequency-domain spacings of the sensing signals are the same, it is conducive to simplifying the configuration and simplifying the content of the configuration information. In addition, the frequency-domain spacings of the sensing signals may be configured via the configuration information, or may be specified by the protocol.

Within a time interval, the time-domain spacings of the sensing signals may be the same or different. In different time intervals, the time-domain spacings of the sensing signals may be the same or different. In a case where the time-domain spacings of the sensing signals are the same, it is conducive simplifying the configuration and simplifying the content of the configuration information. In addition, the time-domain spacings of the sensing signals may be configured via the configuration information, or may be specified by the protocol.

Within a time interval, the spatial parameters of the sensing signals may be the same or different. In different time intervals, the spatial parameters of the sensing signals may be the same or different. In a case where the spatial parameters include but are not limited to at least one of: a transmitting antenna port, a receiving antenna port, a transmitting beam, or a receiving beam. In a case where the spatial parameters of the sensing signals are the same, it is conducive to simplifying the configuration and simplifying the content of the configuration information. In addition, the spatial parameters of the sensing signals may be configured via the configuration information, or may be specified by the protocol.

In some embodiments, the first parameter is determined according to a second parameter, and the second parameter includes at least one of the following parameters: a sensing accuracy or a sensing interval. The second parameter reflects the sensing requirement of the sensing service. Different sensing accuracies and/or sensing intervals correspond to different sensing requirements.

In some embodiments, the sensing accuracy refers to the accuracy of sensing information obtained by processing the sensing signals. The sensing accuracy may be understood as the minimum granularity for expressing the sensing results, or a minimum gap between multiple sensing results, or a minimum value of the sensing results. The above processing may include measuring the sensing signals or other processing methods, which will not be limited in the present disclosure. Considering an example in which a velocity of a sensing target is obtained by measuring sensing signals, the sensing accuracy may include velocity sensing accuracy of the sensing target. The velocity sensing accuracy may be understood as the minimum granularity of velocity that can be sensed. For example, a unit of the velocity sensing accuracy may be meters/second (m/s), kilometers/hour (km/h), etc., which will not be limited in the present disclosure. For example, the velocity sensing accuracy may be 0.1 m/s, 0.5 m/s, 1 m/s, 2 m/s, 5 m/s, 10 m/s, etc., which will not be limited in the present disclosure.

In some embodiments, the sensing interval refers to an interval where sensing information obtained by processing the sensing signals is located. The sensing interval may also be understood as a sensing range or a sensing result range. The above processing may include measuring the sensing signals or other processing methods, which will not be limited in the present disclosure. Considering an example in which a velocity of a sensing target is obtained by measuring sensing signals, the sensing interval may include a velocity sensing interval for the sensing target. The velocity sensing interval may be understood as minimum and maximum values of the velocity that can be sensed, or a range between the minimum and maximum values. For example, the unit of the velocity sensing interval may also be meters/second (m/s), kilometers/hour (km/h), etc., which will not be limited in the present disclosure. For example, the velocity sensing interval may be [-1 m/s, 1 m/s), [-2 m/s, 2 m/s), [-5 m/s, 5 m/s), [-10 m/s, 10 m/s), etc., which will not be limited in the present disclosure. Since velocity has a direction, the negative sign may be understood as the direction of velocity.

In some embodiments, the first node determines the first parameter (including at least one parameter of the time interval of the sensing signals, the quantity of the sensing signals, or the period between the sensing signals) based on the second parameter (including at least one parameter of the sensing accuracy or the sensing interval), and transmits the configuration information. The configuration information may include the first parameter, and may also include any other information that can determine the first parameter. The node that receives the configuration information will obtain the first parameter based on the configuration information, and transmit and/or receive the sensing signals based on the first parameter. In this way, it is possible to implement sensing measurement that satisfies the requirements of the sensing accuracy and/or the sensing interval.

In some embodiments, the configuration information is used for configuring the second parameter, and the second parameter includes at least one of the following parameters: a sensing accuracy or a sensing interval. As for the introduction to the sensing accuracy and the sensing interval, reference can be made to the above description, and details will not be repeated.

In some embodiments, in a case where the configuration information is used for configuring the second parameter and the second parameter includes the sensing accuracy, the configuration information includes a value of the sensing accuracy, or the configuration information includes an index of the sensing accuracy. For example, there may be a first mapping relationship between different sensing accuracies and different indexes. The first mapping relationship may be pre-configured or specified. The configured sensing accuracy value may be obtained by searching the first mapping relationship based on the index of the sensing accuracy included in the configuration information.

In some embodiments, in a case where the configuration information is used for configuring the second parameter and the second parameter includes the sensing interval, the configuration information includes a value of the sensing interval, or the configuration information includes an index of the sensing interval. For example, there may be a second mapping relationship between different sensing intervals and different indexes. The second mapping relationship may be pre-configured or specified. The configured sensing interval may be obtained by searching the second mapping relationship based on the index of the sensing interval included in the configuration information.

In some embodiments, the configuration information transmitted by the first node is used for configuring the first parameter (including at least one parameter of the time interval of the sensing signals, the quantity of the sensing signals, or the period between the sensing signals) and the second parameter (including at least one parameter of the sensing accuracy or the sensing interval), and the second node transmits and/or receives the sensing signals based on the received configuration information. In this way, it is also possible to implement sensing measurement that satisfies the requirements of the sensing accuracy and/or the sensing interval.

In some embodiments, the sensing accuracy and/or sensing interval (i.e., the above-mentioned second parameter) of the sensing signals is determined according to service requirements, or is indicated by an application layer, or is indicated or configured by another node. Different service requirements may correspond to different sensing accuracies and/or sensing intervals. For example, two different service requirements of velocity measurement for pedestrians and vehicles may correspond to different sensing accuracies and/or sensing intervals. In addition, the above method may be executed by a physical layer of the first node. That is, the physical layer determines and transmits the configuration information. Therefore, whether the physical layer determines the first parameter based on the second parameter or the configuration information transmitted by the physical layer is used for configuring the first parameter and the second parameter, the second parameter can be indicated to the physical layer by the application layer. Of course, in some other embodiments, the second parameter may also be indicated or configured to the first node by another node. The another node may be any node in the sensing system other than the first node, such as a server, which will not be limited in the present disclosure.

In some embodiments, the parameter(s) included in the first parameter meet at least one of the following conditions:

the time interval of the sensing signals is negatively correlated with the sensing accuracy;
a product of the period between the sensing signals and the quantity of the sensing signals is negatively correlated with the sensing accuracy;
in a case where the period between the sensing signals is determined, the quantity of the sensing signals is negatively correlated with the sensing accuracy;
in a case where the quantity of the sensing signals is determined, the period between the sensing signals is negatively correlated with the sensing accuracy;
the period between the sensing signals is negatively correlated with the sensing interval;
the time interval of the sensing signals is negatively correlated with the sensing interval;
the product of the period between the sensing signals and the quantity of the sensing signals is negatively correlated with the sensing interval;
in a case where the period between the sensing signals is determined, the quantity of the sensing signals is negatively correlated with the sensing interval; or
in a case where the quantity of the sensing signals is determined, the period between the sensing signals is negatively correlated with the sensing interval.

Herein, A is negatively correlated with B, which means that the larger A is, the smaller B is, and the smaller A is, the larger B is.

Channel modeling in a channel system includes a large-scale channel model and a small-scale channel model. An influencing parameter of the large-scale channel model is a distance between the transmitting end and receiving end. A main influencing parameter of the small-scale channel model is an environmental factor, such as whether there is obstruction, indoor/outdoor, plain, mountain village, town, or whether there is a direct path/multipath effect. Therefore, antennas, distance, and relative velocity of the transmitting and receiving ends will affect the channel.

In a case where sensing is used for velocity measurement, a channel response may be simplified to

$$H(t) = \acute{h} * e^{j2\pi\frac{v}{\lambda}t}$$ based on channel characteristics, where $H(t)$ refers to a channel response at time $t$; $\acute{h}$ represents

a time-invariant parameter used for calculating the channel response; $\lambda$ is a signal wavelength, and $\lambda$ can be calculated

from a carrier center frequency $f_c$ and velocity of light c; $v$ is the velocity; and $j$ represents an imaginary unit.

N channel responses with a time gap $\Delta t$ are $H(0)$, $N(1)$, $H(2)$, ... , $H(N$ - 1), and discrete Fourier transform (DFT) is performed on the N channel responses to obtain $X(k)$, where $\Delta t$ is a time gap between two adjacent receptions/transmissions of sensing signals.

$$X(k) = \sum_{n=0}^{N-1} H(n * \Delta t) * e^{-j2\pi \frac{k*n}{N}}$$

$$= \sum_{n=0}^{N-1} h' * e^{j2\pi \frac{v}{\lambda} n*\Delta t} * e^{-j2\pi \frac{k*n}{N}} \qquad k = 0,1,2,\dots,N-1$$

$$= h' * \sum_{n=0}^{N-1} e^{j2\pi(\frac{v}{\lambda} n*\Delta t - \frac{k*n}{N})}$$

$$= h' * \sum_{n=0}^{N-1} e^{j2\pi n(\frac{v}{\lambda}*\Delta t - \frac{k}{N})}$$

In a case where $\frac{v}{\lambda} * \Delta t - \frac{k}{N} = 0$ , $X(k)$ is the maximum. In this case, the velocity $v = \frac{k*\lambda}{N*\Delta t} = \frac{k*c}{N*\Delta t*f_c}$ ($m/s$) may be calculated.

It may be seen that the velocity sensing accuracy is $\frac{c}{N*\Delta t*f_c}$ , and the velocity sensing interval is $[-\frac{c}{2*\Delta t*f_c}, \frac{c*(\frac{N}{2}-1)}{N*\Delta t*f_c}]$ . In a case where N is large enough or infinite, the maximum velocity is $\frac{c*(N/2-1)}{N*\Delta t*f_c} \approx \frac{\lambda}{2*\Delta t*f_c}$, that is, the velocity sensing interval is $[-\frac{c}{2*\Delta t*f_c}, \frac{c}{2*\Delta t*f_c})$ .

It can be seen from the above formula that the time interval of the sensing signals is negatively correlated with the velocity sensing accuracy; the product of the period between the sensing signals and the quantity of the sensing signals is negatively correlated with the velocity sensing accuracy; in a case where the period between the sensing signals is determined, the quantity of the sensing signals is negatively correlated with the velocity sensing accuracy; in a case where the quantity of the sensing signals is determined, the period between the sensing signals is negatively correlated with the velocity sensing accuracy; the period between the sensing signals is negatively correlated with the velocity sensing interval; the time interval of the sensing signals is negatively correlated with the velocity sensing interval; the product of the period between the sensing signals and the quantity of sensing signals is negatively correlated with the velocity sensing interval; in a case where the period between the sensing signals is determined, the quantity of the sensing signals is negatively correlated with the velocity sensing interval; in a case where the quantity of the sensing signals is determined, the period between the sensing signals is negatively correlated with the velocity sensing interval.

In some embodiments, the first node transmits the configuration information, and the configuration information is used for configuring at least one of: the first parameter, the second parameter, the frequency-domain resources of the sensing signals, or the activation signaling of the sensing signals. For example, the configuration information may only configure the first parameter. For example, the configuration information may only configure the second parameter. For example, the configuration information may only configure the frequency-domain resources of the sensing signals. For example, the configuration information may only configure the activation signaling of the sensing signals. For example, the configuration information is used for configuring the first parameter and the frequency-domain resources of the sensing signals. For example, the configuration information is used for configuring the first parameter and the second parameter. For example, the configuration information is used for configuring the first parameter and the frequency-domain resources of the sensing signals. For example, the configuration information is used for configuring the first parameter and the activation signaling. The above contents configured by the configuration information are merely exemplary, and there may be other combinations, which will not be described in detail in the present disclosure.

In the technical solution provided in the embodiments of the present disclosure, by configuring at least one parameter of the time interval of the sensing signals, the quantity of the sensing signals, or the period between the sensing signals, the node in the sensing system transmits and/or receives the sensing signals based on the above parameter(s), thereby satisfying different sensing requirements.

Referring to FIG. 8, FIG. 8 shows a flowchart of a sensing signal transmission method provided in an embodiment of the present disclosure. The method may include the following step 810.

In step 810, a second node transmits and/or receives sensing signals based on a first parameter, where the first parameter includes at least one of the following parameters: a time interval of sensing signals, a quantity of the sensing signals, or a period between the sensing signals.

As for the introduction of the first parameter, reference can be made to the above description, and details will not be repeated.

In some embodiments, the second node may be any one of: an access network device (e.g., a base station), a terminal device, a server, a core network element, or a sensing information collector. The embodiments of the present disclosure do not limit the specific device used to implement the second node. For example, for the sensing system shown in FIG. 3, the second node may be a sensing control node.

In some embodiments, the second node receives configuration information, and the configuration information is used for configuring the first parameter. The second node may determine the first parameter based on the received configuration information, and transmit and/or receive sensing signals based on the first parameter. For example, the configuration information may be configured and transmitted by a first node, and the second node receives the configuration information transmitted by the first node. In some embodiments, the first node may transmit the configuration information using a broadcast, multicast or unicast manner.

In some embodiments, the first parameter is determined based on a second parameter, and the second parameter includes at least one of the following parameters: a sensing accuracy or a sensing interval. The first node may determine the first parameter based on the second parameter. The first node transmits the configuration information, and the configuration information may include the first parameter or any other information that can determine the first parameter. The second node receives the configuration information and then obtains the first parameter based on the configuration information, and transmits and/or receives the sensing signals based on the first parameter. In this way, it is possible to implement sensing measurement that satisfies the requirements of the sensing accuracy and/or the sensing interval.

In some embodiments, the configuration information is used for configuring the second parameter, and the second parameter includes at least one of the following parameters: a sensing accuracy or a sensing interval.

In some embodiments, the configuration information is used for configuring the first parameter and the second parameter. The configuration information may include the first parameter and the second parameter, or may include any other information that can determine the first parameter and the second parameter. After receiving the configuration information, the second node transmits and/or receives the sensing signals based on the configuration information. In this way, it is also possible to implement sensing measurement that satisfies the requirements of the sensing accuracy and/or the sensing interval.

In some embodiments, the configuration information is used for configuring frequency-domain resources of the sensing signals. The second node transmits and/or receives the sensing signals on the frequency-domain resources configured based on the configuration information.

In some embodiments, the configuration information is used for configuring activation signaling of the sensing signals. The second node transmits and/or receives the sensing signals based on the activation signaling, starting from a time-domain unit in which the activation signaling is received, or starting from a start time-domain unit indicated by the activation signaling.

In some embodiments, the first parameter is specified by a protocol. The second node transmits and/or receives the sensing signals based on the first parameter specified by the protocol. In some embodiments, at least one parameter of the time interval of the sensing signals, the quantity of the sensing signals, or the period between the sensing signals is specified by the protocol. For example, all parameters of the time interval of the sensing signals, the quantity of the sensing signals, and the period between the sensing signals are specified by the protocol. For example, among the time interval of the sensing signals, the quantity of the sensing signals, and the period between the sensing signals, some parameters are specified by the protocol, and other parameters are determined by the second node itself or configured by the first node via the configuration information. For example, the frequency-domain resources of the sensing signals may also be specified by a protocol, or determined by the second node itself, or configured via the configuration information.

In some embodiments, the second node receives the activation signaling, and determines, based on the activation signaling, a start time-domain unit for transmitting and/or receiving the sensing signals. For example, the second node transmits and/or receives the sensing signals based on the first parameter specified in the protocol (including at least one parameter of the time interval of the sensing signals, the quantity of the sensing signals, or the period between the sensing signals), starting from the time-domain unit in which the activation signaling is received, or starting from the start time-domain unit indicated by the activation signaling.

The "protocol" mentioned in the present disclosure may refer to a standard protocol in the field of communications, which may include, for example, an LTE protocol, an NR protocol, and related protocols used in future communication systems, which will not be limited in the present disclosure. The "specified by a protocol" mentioned in the present disclosure refer to being specified by the standard protocol in the field of communications.

In some embodiments, the second node transmitting and/or receiving the sensing signals based on the first parameter includes: the second node transmitting and/or receiving the sensing signals by occupying all or part of time-domain resources within the time interval.

In addition, as for details not described in detail in this embodiment, reference can be made to the relevant introduction and description in the above embodiments of the configuration method.

In the technical solution provided in the embodiments of the present disclosure, by configuring or protocol-specifying at least one parameter of the time interval of the sensing signals, the quantity of the sensing signals, or the period between the sensing signals, the node in the sensing system transmits and/or receives the sensing signals based on the above parameter(s), thereby satisfying different sensing requirements.

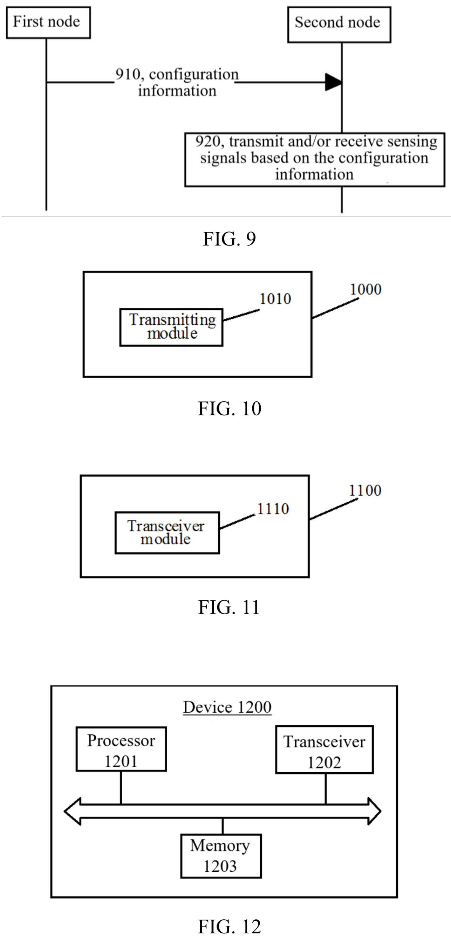

A sensing signal configuration and transmission method provided in the present disclosure will be described below by taking an example in which a first node transmits configuration information and a second node transmits and/or receives sensing signals based on the configuration information. As shown in FIG. 9, the method may include the following steps.

In step 910, a first node transmits configuration information.

In step 920, a second node transmits and/or receives sensing signals based on the configuration information.

In some embodiments, the configuration information is used for configuring a first parameter, and the first parameter includes at least one of the following parameters: a time interval of sensing signals, a quantity of the sensing signals, or a period between the sensing signals. In some embodiments, the configuration information is further used for configuring frequency-domain resources of the sensing signals. In some embodiments, the configuration information is further used for configuring activation signaling of the sensing signals.

In some embodiments, the first node determines the first parameter based on the second parameter, where the second parameter includes at least one of the following parameters: a sensing accuracy or a sensing interval. For example, the first node determines at least one parameter of the time interval of the sensing signals, the quantity of the sensing signals, or the period between the sensing signals based on at least one parameter of the sensing accuracy or the sensing interval. The first node determines the first parameter based on the second parameter, and then may transmit the determined first parameter to the second node via the configuration information, so that the second node transmits and/or receives the sensing signals based on the configuration information.

In some embodiments, the configuration information is used for configuring the time interval of the sensing signals, the quantity of the sensing signals, the period between the sensing signals, and the frequency-domain resources of the sensing signals. For example, the configuration information indicates that N consecutive sensing signals with a time gap of T are transmitted and/or received on frequency-domain resources configured in one or more time intervals. The one or more time intervals may be periodic or triggered by signaling.

Considering the sensing application scenario of velocity measurement as an example, it is assumed that the walking velocity is approximately 1.5 m/s. The sensing system has a first node and a second node, the first node configures sensing signals, the second node transmits and/or receives the sensing signals, and the sensing signals are used for measuring a moving velocity of a sensing target (i.e., a person).

Assuming that $f_c = 2GHz$, to measure the walking velocity of the person, configuration information of corresponding sensing signals may be determined based on a velocity range of 1.5 m/s. Based on the velocity sensing interval $\left[-\dfrac{c}{2*\Delta t*f_c}, \dfrac{c}{2*\Delta t*f_c}\right)$, $\Delta t = 0.05$s may be calculated. That is, in a case of configuring the sensing signals, if the period between the sensing signals is configured as T = 0.05 s, the moving velocity of the sensing target in a range of [-1.5 m/s, 1.5 m/s) will be detected.

Assuming that $f_c = 2GHz$, if the required velocity sensing accuracy is 0.1 m/s, then N = 15 may be calculated based on the velocity sensing accuracy $\dfrac{c}{N*\Delta t*f_c}$. In a case of configuring the sensing signals, the quantity N of the sensing signals with a period of T = 0.05 s will be 15 at least, which may satisfy the requirement of the velocity sensing accuracy of 0.1 m/s.

If it is required to perform velocity measurement at intervals of time L, periodic transmission time intervals need to be configured for the sensing signals, and at least N sensing signals with a period of T are continuously transmitted on the frequency-domain resources configured in each time interval L. Correspondingly, the first node transmits the activation signaling to activate the periodic time intervals L.

In some embodiments, the configuration information is used for configuring the first parameter and the second parameter; the first parameter includes at least one of the following parameters: the time interval of the sensing signals, the quantity of sensing signals, or the period between the sensing signals; and the second parameter includes at least one of the following parameters: the sensing accuracy or the sensing interval. In some embodiments, the configuration information is further used for configuring the frequency-domain resources of the sensing signals. In some embodiments, the configuration information is further used for configuring the activation signaling of the sensing signals.

The configuration information will be described below via several examples.

Example 1: the configuration information is used for configuring the time interval of the sensing signals, the quantity of the sensing signals, and the frequency-domain resources of the sensing signals. Optionally, the configuration information is further used for configuring an activation instruction.

For example, the configuration information is used for configuring the time interval L of the sensing signals, and the quantity of sensing signals within the time interval L is N. A sensing signal is transmitted every period L / (N - 1) on the configured frequency-domain resources starting from a start time of the time interval L, or starting from a position of a transmission time offset O of a first sensing signal within the time interval L, or starting from the activation signaling, or starting from a start time indicated by the activation signaling.

The sensing signals are transmitted or received based on this configuration, so that the velocity sensing with the velocity sensing accuracy of $\dfrac{c}{N*L/(N-1)*f_c}$ and the velocity sensing interval of $\left[-\dfrac{c}{2*L/(N-1)*f_c}, \dfrac{c}{2*L/(N-1)*f_c}\right)$ may be implemented.

Example 2: the configuration information is used for configuring the time interval of the sensing signals, the period between the sensing signals, and the frequency-domain resources of the sensing signals. Optionally, the configuration information is further used for configuring an activation instruction.

For example, the configuration information is used for configuring the time interval L of the sensing signals and the period T between the sensing signals within the time interval L. A sensing signals is transmitted every period T on the configured frequency-domain resources starting from a start time of the time interval L, or starting from a position of a transmission time offset O of a first sensing signal within the time interval L, or starting from the activation signaling, or starting from a start time indicated by the activation signaling, and a total of floor(L/T) + 1 sensing signals are transmitted, where "floor" means rounding down.

The sensing signals are transmitted or received based on this configuration, so that the velocity sensing with the velocity sensing accuracy of $\dfrac{c}{\left(floor\left(\frac{L}{T}\right)+1\right)*T*f_c}$ and the velocity sensing interval of $\left[-\dfrac{c}{2*T*f_c}, \dfrac{c}{2*T*f_c}\right)$ may be implemented.

Example 3: the configuration information is used for configuring the time interval of the sensing signals, the quantity of the sensing signals, the period between the sensing signals, and the frequency-domain resources of the sensing signals. Optionally, the configuration information is further used for configuring an activation instruction.

For example, the configuration information is used for configuring the time interval L of sensing signals, the period T between the sensing signal within the time interval L, and the quantity of continuously transmitted sensing signals within the time interval L. A sensing signal is transmitted every period T on the configured frequency-domain resources starting from a start time of the time interval L, or starting from a position of a transmission time offset O of a first sensing signal within the time interval L, or starting from the activation signaling, or starting from a start time indicated by the activation signaling, and a total of N sensing signals are transmitted, where N is less than or equal to floor(L/T) + 1 (N ≤ floor(L/T) + 1), and "floor" means rounding down. This implies that transmissions are performed at equal intervals in all or in part of the time interval T.

The sensing signals are transmitted or received based on this configuration, so that the velocity sensing with the velocity sensing accuracy of $\dfrac{c}{N*T*f_c}$ and the velocity sensing interval of $\left[-\dfrac{c}{2*T*f_c}, \dfrac{c}{2*T*f_c}\right)$ may be implemented.

Example 4: the configuration information is used for configuring the quantity of the sensing signals, the period between the sensing signals, and the frequency-domain resources of the sensing signals. Optionally, the configuration information is further used for configuring an activation instruction.

For example, the configuration information is used for configuring the period T between the sensing signals and the quantity N of the sensing signals. A sensing signal is transmitted every period T on the configured frequency-domain resources starting from an access time, or starting from the activation signaling, or starting from a start time indicated by the activation signaling, and a total of N sensing signals are transmitted.

The sensing signals are transmitted or received based on this configuration, so that the velocity sensing with the velocity sensing accuracy of $\dfrac{c}{N*T*f_c}$ and the velocity sensing interval of $\left[-\dfrac{c}{2*T*f_c}, \dfrac{c}{2*T*f_c}\right)$ may be implemented.

Example 5: the configuration information is used for configuring the quantity of sensing signals, the sensing accuracy, and the frequency-domain resources. Optionally, the configuration information is further used for configuring an activation instruction.

For example, the configuration information is used for configuring the quantity N of the sensing signals and the velocity sensing accuracy of X. A sensing signal is transmitted every period $\dfrac{c}{N*X*f_c}$ on the configured frequency-domain resources starting from an access time, or starting from the activation signaling, or starting from a start time indicated by the activation signaling, and a total of N sensing signals are transmitted.

The sensing signals are transmitted or received based on this configuration, so that the velocity sensing with the velocity sensing accuracy of X and the velocity sensing interval of $\left[-\frac{N*X}{2}, \frac{N*X}{2}\right)$ may be implemented.

Example 6: the configuration information is used for configuring the quantity of sensing signals, the sensing interval, and the frequency-domain resources. Optionally, the configuration information is further used for configuring an activation instruction.

For example, the configuration information is used for configuring the quantity N of the sensing signals and the velocity sensing interval of [V_min, V _max). A sensing signal is transmitted every period $\frac{c}{2*V\_max*f_c}$ on the configured frequency-domain resources starting from an access time, or starting from the activation signaling, or starting from a start time indicated by the activation signaling, and a total of N sensing signals are transmitted.

The sensing signals are transmitted or received based on this configuration, so that the velocity sensing with the velocity sensing accuracy of V_max / (N - 1) and the velocity sensing interval of [V_min, V_max) may be implemented.

Example 7: the configuration information is used for configuring the period between the sensing signals, the sensing accuracy, and the frequency-domain resources. Optionally, the configuration information is further used for configuring an activation instruction.

For example, the configuration information is used for configuring the period T between the sensing signals and the velocity sensing accuracy X. A sensing signal is transmitted every period T on the configured frequency-domain resources starting from an access time, or starting from the activation signaling, or starting from a start time indicated by the activation signaling, and a total of $\frac{c}{T*X*f_c}$ sensing signals are transmitted.

The sensing signals are transmitted or received based on this configuration, so that the velocity sensing with the velocity sensing accuracy of X and the velocity sensing interval of $\left[-\frac{c}{2*T*f_c}, \frac{c}{2*T*f_c}\right)$ may be implemented.

Example 8: the configuration information is used for configuring the period between the sensing signals, the sensing interval, and the frequency-domain resources. Optionally, the configuration information is further used for configuring an activation instruction.

For example, the configuration information is used for configuring the period T between the sensing signals and the velocity sensing interval [V_min, V_max). A sensing signal is transmitted every period T on the configured frequency-domain resources starting from an access time, or starting from the activation signaling, or starting from a start time indicated by the activation signaling, and a total of $\frac{c}{c-T*2*V\_max*f_c}$ sensing signals are transmitted.

The sensing signals are transmitted or received based on this configuration, so that the velocity sensing with the velocity sensing accuracy of $V\_max/\left(\frac{c}{c-T*2*V\_max*f_c} - 1\right)$ and the velocity sensing interval of [V_min, V_max) may be implemented.

Example 9: the configuration information is:

```
S-RS-Config::={
TimeInterval;
Offset;
Number;
FrequencyDomainResource;
```

S-RS-Config is used for configuring the sensing signals; TimeInterval is used for configuring the time interval of the sensing signals, which may be configured by a start position and length of the time interval; Offset is used for configuring a time-domain position of a first sensing signal within the time interval; Number is used for configuring the quantity of sensing signals within the time interval; and FrequencyDomainResource is used for configuring the frequency-domain resources occupied by the sensing signals.

Example 10: the configuration information is:

```
S-RS-Config::={
TimeIntervalPeriodicityAndOffset;
Offset;
Number;
FrequencyDomainResource;
}
```

S-RS-Config is used for configuring the sensing signals; TimeIntervalPeriodicityAndOffset is used for configuring the time intervals of the sensing signals, the time intervals of the sensing signals being periodic, including start positions and lengths of the time intervals, and a period between start positions of every two adjacent time intervals; Offset is used for configuring a time-domain position of a first sensing signal within the time interval; Number is used for configuring the quantity of sensing signals within the time interval; and FrequencyDomainResource is used for configuring the frequency-domain resources occupied by the sensing signals.

Example 11: the configuration information is:

```
S-RS-Config::={
TimeInterval;
Offset;
S-RS-Period;
FrequencyDomainResource;
 ... }
```

S-RS-Config is used for configuring the sensing signals; TimeInterval is used for configuring the time interval of the sensing signals, which may be configured by a start position and length of the time interval; Offset is used for configuring a time-domain position of a first sensing signal within the time interval; S-RS-Period is used for configuring a period between the sensing signals; and FrequencyDomainResource is used for configuring the frequency-domain resources occupied by the sensing signals.

Example 12: the configuration information is:

```
S-RS-Config::={
TimeIntervalPeriodicityAndOffset;
Offset;
S-RS-Period;
FrequencyDomainResource;
  ...
  }
```

S-RS-Config is used for configuring the sensing signals; TimeIntervalPeriodicityAndOffset is used for configuring the time intervals of the sensing signals, the time intervals of the sensing signals being periodic, including star positions and lengths of the time intervals, and a period between start positions of every two adjacent time intervals; Offset is used for configuring a time-domain position of a first sensing signal within the time interval; S-RS-Period is used for configuring the period between the sensing signals; and FrequencyDomainResource is used for configuring the frequency-domain resources occupied by the sensing signals.

In Examples 9 to 12 mentioned above, SensingGranularity and/or SensingRang may further be included; SensingGranularity is used for configuring the sensing accuracy; and SensingRang is used for configuring the sensing interval, which may also be called the sensing range.

It should be noted that, the above-mentioned steps performed by the first node may be independently implemented as the sensing signal configuration method at the first node side; and the above-mentioned steps performed by the second node may be independently implemented as the sensing signal transmission method at the second node side.

The apparatus embodiments of the present disclosure will be described below, which may be used to perform method embodiments of the present disclosure. As for details not disclosed in the apparatus embodiments of the present disclosure, reference can be made to the method embodiments of the present disclosure.

Referring to FIG. 10, FIG. 10 shows a block diagram of a sensing signal configuration apparatus provided in an embodiment of the present disclosure. The apparatus has the functions of implementing the method examples on the first node side, and the functions may be implemented by hardware or by performing corresponding software by hardware. The apparatus may be the first node described above, or may be arranged in the first node. As shown in FIG. 10, the apparatus 1000 may include: a transmitting module 1010.

The transmitting module 1010 is configured to transmit configuration information, where the configuration information is used for configuring a first parameter, and the first parameter includes at least one of the following parameters: a time interval of sensing signals, a quantity of the sensing signals, or a period between the sensing signals.

In some embodiments, the first parameter is determined based on a second parameter, and the second parameter includes at least one of the following parameters: a sensing accuracy or a sensing interval.

In some embodiments, the configuration information is further used for configuring a second parameter, and the second parameter includes at least one of the following parameters: a sensing accuracy or a sensing interval.

In some embodiments, in a case where the second parameter includes the sensing accuracy, the configuration information includes a value of the sensing accuracy, or the configuration information includes an index of the sensing accuracy; and/or, in a case where the second parameter includes the sensing interval, the configuration information includes a value of the sensing interval, or the configuration information includes an index of the sensing interval.

In some embodiments, all or part of time-domain resources within the time interval(s) are used for transmitting and/or receiving the sensing signals.

In some embodiments, the time interval is periodic, or the time interval is non-periodic.

In some embodiments, the time interval includes one or more time-domain units.

In some embodiments, the time-domain units are any one of: symbols, slots, frames, sub-frames, milliseconds, or seconds.

In some embodiments, within the time interval, the sensing signals meet at least one of the following conditions that:

frequency-domain resources of the sensing signals are the same;
spacings of the frequency-domain resources of the sensing signals are pre-configured or specified;
frequency-domain spacings of the sensing signals are the same;
time-domain spacings of the sensing signals are the same; or
spatial parameters of the sensing signals are the same.

In some embodiments, the time interval is determined based on at least two of the following parameters: a start time-domain unit of the time interval, an end time-domain unit of the time interval, and a duration of the time interval.

In some embodiments, the configuration information is further used for configuring frequency-domain resources of the sensing signals.

In some embodiments, the frequency-domain resources include one or more frequency-domain units.

In some embodiments, the frequency-domain units are any one of: subcarriers, resource blocks (RBs), sub-bands, bandwidth parts (BWPs), or resource block groups (RBGs).

In some embodiments, the frequency-domain resources are indicated by a bitmap, or the frequency-domain resources are determined based on a frequency-domain start position and a quantity of included frequency-domain units.

In some embodiments, the configuration information is further used for configuring activation signaling of the sensing signals.

In some embodiments, the activation signaling is used for determining a start time-domain unit for transmitting and/or receiving the sensing signals.

In some embodiments, a parameter included in the first parameter meets at least one of the following conditions that:

the time interval of the sensing signals is negatively correlated with a sensing accuracy;
a product of the period between the sensing signals and the quantity of the sensing signals is negatively correlated with the sensing accuracy;
in a case where the period between the sensing signals is determined, the quantity of the sensing signals is negatively correlated with the sensing accuracy;
in a case where the quantity of the sensing signals is determined, the period between the sensing signals is negatively correlated with the sensing accuracy;
the period between the sensing signals is negatively correlated with a sensing interval;
the time interval of the sensing signals is negatively correlated with the sensing interval;
the product of the period between the sensing signals and the quantity of the sensing signals is negatively correlated with the sensing interval;
in a case where the period between the sensing signals is determined, the quantity of the sensing signals is negatively correlated with the sensing interval; or
in a case where the quantity of the sensing signals is determined, the period between the sensing signals is negatively correlated with the sensing interval.

In some embodiments, a sensing accuracy and/or a sensing interval of the sensing signals are determined according to service requirements, or are indicated by an application layer, or are indicated or configured by another node.

Referring to FIG. 11, FIG. 11 shows a block diagram of a sensing signal transmission apparatus provided in an embodiment of the present disclosure. The apparatus has the functions of implementing the method examples on the second node side, and the functions may be implemented by hardware or by performing corresponding software by hardware. The apparatus may be the second node described above, or may be arranged in the second node. As shown in FIG. 11, the apparatus 1100 may include: a transceiver module 1110.

The transceiver module 1110 is configured to transmit and/or receive sensing signals based on a first parameter, where the first parameter includes at least one of the following parameters: a time interval of sensing signals, a quantity of the sensing signals, or a period between the sensing signals.

In some embodiments, the transceiver module 1110 is further configured to receive configuration information, where the configuration information is used for configuring the first parameter.

In some embodiments, the configuration information received by the second node is used for configuring a second parameter, and the second parameter includes at least one of the following parameters: a sensing accuracy or a sensing interval.

In some embodiments, in a case where the second parameter includes the sensing accuracy, the configuration information includes a value of the sensing accuracy, or the configuration information includes an index of the sensing accuracy; and/or in a case where the second parameter includes the sensing interval, the configuration information includes a value of the sensing interval, or the configuration information includes an index of the sensing interval.

In some embodiments, the configuration information received by the second node is used for configuring frequency-domain resources of the sensing signals.

In some embodiments, the frequency-domain resources include one or more frequency-domain units.

In some embodiments, the frequency-domain units are any one of: subcarriers, resource blocks (RBs), sub-bands, bandwidth parts (BWPs), or resource block groups (RBGs).

In some embodiments, the frequency-domain resources are indicated by a bitmap, or the frequency-domain resources are determined based on a frequency-domain start position and a quantity of included frequency-domain units.

In some embodiments, the configuration information received by the second node is used for configuring activation signaling of the sensing signals.

In some embodiments, the activation signaling is used for determining a start time-domain unit for transmitting and/or receiving the sensing signals.

In some embodiments, the first parameter is specified by a protocol.

In some embodiments, the transceiver module 1110 is configured to transmit and/or receive the sensing signals by occupying all or part of time-domain resources within the time interval.

In some embodiments, the time interval is periodic, or the time interval is non-periodic.

In some embodiments, the time interval includes one or more time-domain units.

In some embodiments, the time-domain units are any one of: symbols, slots, frames, sub-frames, milliseconds, or seconds.

In some embodiments, within the time interval, the sensing signals satisfy at least one of the following conditions that:

> frequency-domain resources of the sensing signals are the same;
> spacings of the frequency-domain resources of the sensing signals are pre-configured or specified;
> frequency-domain spacings of the sensing signals are the same;
> time-domain spacings of the sensing signals are the same; or
> spatial parameters of the sensing signals are the same.

In some embodiments, the time interval is determined according to at least two of the following parameters: a start time-domain unit of the time interval, an end time-domain unit of the time interval, or a duration of the time interval.

In some embodiments, a parameter included in the first parameter satisfies at least one of the following conditions that:

> the time interval of the sensing signals is negatively correlated with the sensing accuracy;
> a product of the period between the sensing signals and the quantity of the sensing signals is negatively correlated with the sensing accuracy;
> in a case where the period between the sensing signals is determined, the quantity of the sensing signals is negatively correlated with the sensing accuracy;
> in a case where the quantity of the sensing signals is determined, the period between the sensing signals is negatively correlated with the sensing accuracy;
> the period between the sensing signals is negatively correlated with the sensing interval;
> the time interval of the sensing signals is negatively correlated with the sensing interval;
> the product of the period between the sensing signals and the quantity of the sensing signals is negatively correlated with the sensing interval;
> in a case where the period between the sensing signals is determined, the quantity of the sensing signals is negatively correlated with the sensing interval; or
> in a case where the quantity of the sensing signals is determined, the period between the sensing signals is negatively correlated with the sensing interval.

In some embodiments, the sensing accuracy and/or the sensing interval of the sensing signals are determined according to service requirements, or are indicated by an application layer, or are indicated or configured by another node.

It should be noted that the division of the functional modules are only taken as an example for the apparatuses provided in the above embodiments to implement their functions. In actual applications, the functions may be assigned to different functional modules according to actual needs, that is, the content structure of the apparatus may be divided into different functional modules to implement all or part of the functions described above.

Regarding the apparatuses in the above embodiments, the specific manners in which each module performs operations are described in detail in the related embodiments of the methods, which will not be repeated here.

Referring to FIG. 12, FIG. 12 shows a schematic structural diagram of a device 1200 provided in an embodiment of the present disclosure. The device 1200 can be used to perform the steps of the method in the above embodiments. The device 1200 may be an access network device (e.g., a base station), a terminal device, a server, a core network element, a sensing information collector, or other devices. The device 1200 may include: a processor 1201, a transceiver 1202, and a memory 1203.

The processor 1201 includes one or more processing cores. The processor 1201 performs various functional applications and information processing by running software programs and modules.

The transceiver 1202 may include a receiver and a transmitter. For example, the receiver and the transmitter may be implemented as the same wireless communication component, and the wireless communication component may include a wireless communication chip and radio frequency antennas).

The memory 1203 may be connected to the processor 1201 and the transceiver 1202.

The memory 1203 may be configured to store a computer program executed by the processor, and the processor 1201 is configured to execute the computer program to implement each step of the above method.

In addition, the memory 1203 may be implemented by any type of volatile or non-volatile storage device or a combination of volatile and non-volatile storage devices, and the volatile or non-volatile storage device includes but is not limited to: a magnetic disk or an optical disk, an electrically erasable programmable read-only memory, an erasable programmable read-only memory, a static random access memory, a read-only memory, a magnetic memory, a flash memory, or a programmable read-only memory.

In some embodiments, in a case where the device 1200 is implemented as a first node, the transceiver 1202 is configured to transmit configuration information, the configuration information is used for configuring a first parameter, and the first parameter includes at least one of the following parameters: a time interval of sensing signals, a quantity of the sensing signals, or a period between the sensing signals.

In some embodiments, in a case where the device 1200 is implemented as a second node, the transceiver 1202 is configured to transmit and/or receive sensing signals based on a first parameter, and the first parameter includes at least one of the following parameters: a time interval of the sensing signals, a quantity of the sensing signals, or a period between the sensing signals.

As for details not described in detail in the above embodiments, reference can be made to the introduction of the method embodiments, which will not be repeated here.

The embodiments of the present disclosure further provide a computer-readable storage medium, the storage medium has stored a computer program, and the computer program is used for being executed by a processor of a first node, to implement the sensing signal configuration method.

The embodiments of the present disclosure further provide a computer-readable storage medium, the storage medium has stored a computer program, and the computer program is used for being executed by a processor of a second node, to implement the sensing signal transmission method.

Optionally, the computer-readable storage medium may include: a read-only memory (ROM), a random-access memory (RAM), a solid state drive (SSD) or an optical disk. Random access memories may include a resistance random access memory (ReRAM) and a dynamic random access memory (DRAM).

The embodiments of the present disclosure further provide a chip, the chip includes a programmable logic circuit and/or program instructions, and when the chip runs on a first node, the chip is configured to implement the sensing signal configuration method.

The embodiments of the present disclosure further provide a chip, the chip includes a programmable logic circuit and/or program instructions, and when the chip runs on a second node, the chip is configured to implement the sensing signal transmission method.

The embodiments of the present disclosure further provide a computer program product, the computer program product includes a computer program, the computer program is stored in a computer-readable storage medium, and a processor of a first node reads the computer program from the computer-readable storage medium and executes the computer program to implement the sensing signal configuration method.

The embodiments of the present disclosure further provide a computer program product, the computer program product includes a computer program, the computer program is stored in a computer-readable storage medium, and a processor of a second node reads the computer program from the computer-readable storage medium and executes the computer program to implement the sensing signal transmission method.

It should be understood that the term "indicate" mentioned in the embodiments of the present disclosure may mean a direct indication or an indirect indication, or may represent that there is an association relationship. For example, A indicates B, which may mean that A directly indicates B (for example, B may be obtained by A); or it may mean that A indirectly indicates B (for example, A indicates C, and B may be obtained by C); or it may mean that there is an association relationship between A and B.

In the description of the embodiments of the present disclosure, the term "correspond" may mean that there is a direct correspondence or indirect correspondence between two, or it may mean that there is an associated relationship between the two, or it may mean a relationship of indicating and being indicated or a relationship of configuring and being configured, or the like.

The term "multiple" mentioned herein refers to two or more. The term "and/or" is an association relationship to describe associated objects, which means that there may be three types of relationships. For example, A and/or B may represent that: A exists alone, both A and B exist, and B exists alone. In addition, the character "/" herein generally means that related objects before and after "/" are in an "or" relationship.

In addition, the serial numbers of the steps described herein only illustrate a possible execution order of the steps. In some other embodiments, the above steps may be performed without following the order of the serial numbers. For example, two steps with different serial numbers are performed simultaneously, or two steps with different serial numbers are performed in an order opposite to that shown in the figure, which will not be limited in the embodiments of the present disclosure.

Those skilled in the art will appreciate that in one or more of the above examples, the functions described in the embodiments of the present disclosure may be implemented in hardware, software, firmware or any combination of hardware, software, and firmware. When implemented in software, the functions may be stored on a computer-readable medium or transmitted as one or more instructions or codes on a computer-readable medium. The computer-readable medium includes a computer storage medium and a communication medium. The communication medium includes any medium that facilitates transfer of a computer program from one place to another. The storage medium may be any available medium that can be accessed by a general-purpose or special-purpose computer.

The foregoing descriptions are merely exemplary embodiments of the present disclosure and are not intended to limit the present disclosure. Any modifications, equivalent substitutions, improvements, etc. made within the spirit and principles of the present disclosure shall be included within the protection scope of the present disclosure.

**Claims**

1. A sensing signal configuration method, performed by a first node, and comprising:
transmitting configuration information, wherein the configuration information is used for configuring a first parameter, and the first parameter comprises at least one of the following parameters: a time interval of sensing signals, a quantity of the sensing signals, or a period between the sensing signals.

2. The method according to claim 1, wherein the first parameter is determined based on a second parameter, and the second parameter comprises at least one of the following parameters: a sensing accuracy or a sensing interval.

3. The method according to claim 1 or 2, wherein the configuration information is further used for configuring a second parameter, and the second parameter comprises at least one of the following parameters: a sensing accuracy or a sensing interval.

4. The method according to claim 3, wherein

in a case where the second parameter comprises the sensing accuracy, the configuration information comprises a value of the sensing accuracy or an index of the sensing accuracy;
and/or
in a case where the second parameter comprises the sensing interval, the configuration information comprises a value of the sensing interval or an index of the sensing interval.

5. The method according to any one of claims 1 to 4, wherein all or part of time-domain resources within the time interval are used for transmitting and/or receiving the sensing signals.

6. The method according to any one of claims 1 to 5, wherein the time interval is periodic, or the time interval is non-periodic.

7.  The method according to any one of claims 1 to 6, wherein the time interval comprises one or more time-domain units.

8.  The method according to claim 7, wherein the time-domain units are any one of: symbols, slots, frames, sub-frames, milliseconds, or seconds.

9.  The method according to any one of claims 1 to 8, wherein within the time interval, the sensing signals meet at least one of the following conditions that:

    frequency-domain resources of the sensing signals are the same;
    spacings of the frequency-domain resources of the sensing signals are pre-configured or specified;
    frequency-domain spacings of the sensing signals are the same;
    time-domain spacings of the sensing signals are the same; or
    spatial parameters of the sensing signals are the same.

10. The method according to any one of claims 1 to 9, wherein the time interval is determined based on at least two of the following parameters: a start time-domain unit of the time interval, an end time-domain unit of the time interval, and a duration of the time interval.

11. The method according to any one of claims 1 to 10, wherein the configuration information is further used for configuring frequency-domain resources of the sensing signals.

12. The method according to claim 11, wherein the frequency-domain resources comprise one or more frequency-domain units.

13. The method according to claim 12, wherein the frequency-domain units are any one of: subcarriers, resource blocks (RBs), sub-bands, bandwidth parts (BWPs), or resource block groups (RBGs).

14. The method according to any one of claims 11 to 13, wherein the frequency-domain resources are indicated by a bitmap, or the frequency-domain resources are determined based on a frequency-domain start position and a quantity of comprised frequency-domain units.

15. The method according to any one of claims 1 to 14, wherein the configuration information is further used for configuring activation signaling of the sensing signals.

16. The method according to claim 15, wherein the activation signaling is used for determining a start time-domain unit for transmitting and/or receiving the sensing signals.

17. The method according to any one of claims 1 to 16, wherein a parameter comprised in the first parameter satisfies at least one of the following conditions that:

    the time interval of the sensing signals is negatively correlated with a sensing accuracy;
    a product of the period between the sensing signals and the quantity of the sensing signals is negatively correlated with the sensing accuracy;
    in a case where the period between the sensing signals is determined, the quantity of the sensing signals is negatively correlated with the sensing accuracy;
    in a case where the quantity of the sensing signals is determined, the period between the sensing signals is negatively correlated with the sensing accuracy;
    the period between the sensing signals is negatively correlated with a sensing interval;
    the time interval of the sensing signals is negatively correlated with the sensing interval;
    the product of the period between the sensing signals and the quantity of the sensing signals is negatively correlated with the sensing interval;
    in a case where the period between the sensing signals is determined, the quantity of the sensing signals is negatively correlated with the sensing interval; or
    in a case where the quantity of the sensing signals is determined, the period between the sensing signals is negatively correlated with the sensing interval.

18. The method according to any one of claims 1 to 17, wherein a sensing accuracy and/or a sensing interval of the sensing signals are determined according to service requirements, or are indicated by an application layer, or are indicated or configured by another node.

19. A sensing signal transmission method, wherein the method is performed by a second node, and comprising: transmitting and/or receiving sensing signals based on a first parameter, wherein the first parameter comprises at least one of the following parameters: a time interval of sensing signals, a quantity of the sensing signals, or a period between the sensing signals.

20. The method according to claim 19, wherein before transmitting and/or receiving the sensing signals based on the first parameter, the method further comprises:
receiving configuration information, wherein the configuration information is used for configuring the first parameter.

21. The method according to claim 19 or 20, wherein configuration information received by the second node is used for configuring a second parameter, and the second parameter comprises at least one of the following parameters: a sensing accuracy or a sensing interval.

22. The method according to claim 21, wherein

in a case where the second parameter comprises the sensing accuracy, the configuration information comprises a value of the sensing accuracy, or the configuration information comprises an index of the sensing accuracy; and/or
in a case where the second parameter comprises the sensing interval, the configuration information comprises a value of the sensing interval, or the configuration information comprises an index of the sensing interval.

23. The method according to any one of claims 19 to 22, wherein configuration information received by the second node is used for configuring frequency-domain resources of the sensing signals.

24. The method according to claim 23, wherein the frequency-domain resources comprise one or more frequency-domain units.

25. The method according to claim 24, wherein the frequency-domain units are any one of: subcarriers, resource blocks (RBs), sub-bands, bandwidth parts (BWPs), or resource block groups (RBGs).

26. The method according to any one of claims 23 to 25, wherein the frequency-domain resources are indicated by a bitmap, or the frequency-domain resources are determined based on a frequency-domain start position and a quantity of comprised frequency-domain units.

27. The method according to any one of claims 19 to 26, wherein configuration information received by the second node is used for configuring activation signaling of the sensing signals.

28. The method according to claim 27, wherein the activation signaling is used for determining a start time-domain unit for transmitting and/or receiving the sensing signals.

29. The method according to any one of claims 19, 21 to 28, wherein the first parameter is specified by a protocol.

30. The method according to any one of claims 19 to 29, wherein transmitting and/or receiving the sensing signals based on the first parameter comprises:
transmitting and/or receiving the sensing signals by occupying all or part of time-domain resources within the time interval.

31. The method according to any one of claims 19 to 30, wherein the time interval is periodic, or the time interval is non-periodic.

32. The method according to any one of claims 19 to 31, wherein the time interval comprises one or more time-domain units.

33. The method according to claim 32, wherein the time-domain units are any one of: symbols, slots, frames, sub-frames, milliseconds, or seconds.

34. The method according to any one of claims 19 to 33, wherein within the time interval, the sensing signals satisfy at least one of the following conditions that:

   frequency-domain resources of the sensing signals are the same;
   spacings of the frequency-domain resources of the sensing signals are pre-configured or specified;
   frequency-domain spacings of the sensing signals are the same;
   time-domain spacings of the sensing signals are the same; or
   spatial parameters of the sensing signals are the same.

35. The method according to any one of claims 19 to 34, wherein the time interval is determined based on at least two of the following parameters: a start time-domain unit of the time interval, an end time-domain unit of the time interval, and a duration of the time interval.

36. The method according to any one of claims 19 to 35, wherein a parameter comprised in the first parameter satisfies at least one of the following conditions that:

   the time interval of the sensing signals is negatively correlated with a sensing accuracy;
   a product of the period between the sensing signals and the quantity of the sensing signals is negatively correlated with the sensing accuracy;
   in a case where the period between the sensing signals is determined, the quantity of the sensing signals is negatively correlated with the sensing accuracy;
   in a case where the quantity of the sensing signals is determined, the period between the sensing signals is negatively correlated with the sensing accuracy;
   the period between the sensing signals is negatively correlated with a sensing interval;
   the time interval of the sensing signals is negatively correlated with the sensing interval;
   the product of the period between the sensing signals and the quantity of the sensing signals is negatively correlated with the sensing interval;
   in a case where the period between the sensing signals is determined, the quantity of the sensing signals is negatively correlated with the sensing interval; or
   in a case where the quantity of the sensing signals is determined, the period between the sensing signals is negatively correlated with the sensing interval.

37. The method according to any one of claims 19 to 36, wherein a sensing accuracy and/or a sensing interval of the sensing signals are determined according to service requirements, or are indicated by an application layer, or are indicated or configured by another node.

38. A sensing signal configuration apparatus, comprising:
   a transmitting module, configured to transmit configuration information, wherein the configuration information is used for configuring a first parameter, and the first parameter comprises at least one of the following parameters: a time interval of sensing signals, a quantity of the sensing signals, or a period between the sensing signals.

39. A sensing signal transmission apparatus, comprising:
   a transceiver module, configured to transmit and/or receive sensing signals based on a first parameter, wherein the first parameter comprises at least one of the following parameters: a time interval of sensing signals, a quantity of the sensing signals, or a period between the sensing signals.

40. A device, comprising a processor and a memory, wherein the memory has stored a computer program, and the processor performs the computer program to implement the method according to any one of claims 1 to 18, or to implement the method according to any one of claims 19 to 37.

41. A computer-readable storage medium, wherein the storage medium has stored a computer program, and the computer program is used for being executed by a processor, to implement the method according to any one of claims 1 to 18, or to implement the method according to any one of claims 19 to 37.

42. A chip, comprising a programmable logic circuit and/or program instructions, wherein when the chip runs, the chip is configured to implement the method according to any one of claims 1 to 18, or to implement the method according to any one of claims 19 to 37.

43. A computer program product, comprising computer instructions, wherein the computer instructions are stored in a computer-readable storage medium, and a processor reads the computer instructions from the computer-readable storage medium and executes the computer instructions, to implement the method according to any one of claims 1 to 18, or to implement the method according to any one of claims 19 to 37.

Network architecture 100

Core network

30

30

Access network

20

20

10

FIG. 1

| Mode 1, a base station self-transmitting and self-receiving sensing<br><br>Sensing signal<br>Base station — Echo signal — Sensing target | Mode 2, a terminal self-transmitting and self-receiving sensing<br><br>Sensing signal<br>Terminal — Echo signal — Sensing target |
| --- | --- |
| Mode 3, a base station collaborative sensing<br><br>Base station A — Base station B<br>Sensing signal — Echo signal<br>Sensing target | Mode 4, a terminal collaborative sensing<br><br>Terminal A — Terminal B<br>Sensing signal — Echo signal<br>Sensing target |
| Mode 5, a base station-terminal collaborative sensing<br><br>Base station — Terminal<br>Sensing Signal — Echo signal<br>Sensing target | Mode 6, a terminal-base station collaborative sensing<br><br>Terminal — Base station<br>Sensing signal — Echo signal<br>Sensing target |
| Mode 7, a sensing target is a transmitting node of a sensing signal<br><br>Sensing signal<br>Transmitting node of sensing signal (Sensing target) — Receiving node of sensing signal | Mode 8, a sensing target is a receiving node of a sensing signal<br><br>Sensing signal<br>Echo signal<br>Transmitting Node of sensing signal — Receiving node of sensing signal (Sensing target) |

**FIG. 2**

31

or

Communication signal — Sensing node 3

Communication signal

Sensing target

Sensing signal

Sensing signal

Sensing node 1

Sensing signal

Sensing node 2

**FIG. 3**

410

A first node transmits configuration information, where the configuration information is used for configuring a first parameter, and the first parameter includes at least one of the following parameters: a time interval of sensing signals, a quantity of the sensing signals, or a period between the sensing signals

FIG. 4

FIG. 5

FIG. 6

FIG. 7

810

A second node transmits and/or receives sensing signals based on a first parameter, where the first parameter includes at least one of the following parameters: a time interval of sensing signals, a quantity of the sensing signals, or a period between the sensing signals

FIG. 8

FIG. 9

FIG. 10

FIG. 11

FIG. 12

## INTERNATIONAL SEARCH REPORT

| International application No. |
| --- |
| **PCT/CN2023/107088** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT, ENTXT, VEN: 感知, 配置, 参数, 数量, 间隔, 精度, 频域, 时域, 资源, 速度, 定位, perception, sense, configur+, parameter, number, interval, precision, time, frequency resource, rate, location

### C. DOCUMENTS CONSIDERED TO BE RELEVANT

| Category* | Citation of document, with indication, where appropriate, of the relevant passages | Relevant to claim No. |
| --- | --- | --- |
| X | CN 115150769 A (ZTE CORP.) 04 October 2022 (2022-10-04)<br>description, paragraphs 43-110 | 1-43 |
| X | CN 115696365 A (VIVO COMMUNICATION TECHNOLOGY CO., LTD.) 03 February 2023 (2023-02-03)<br>description, paragraphs 51-170 | 1-43 |
| X | CN 115696369 A (VIVO COMMUNICATION TECHNOLOGY CO., LTD.) 03 February 2023 (2023-02-03)<br>description, paragraphs 65-214 | 1-43 |
| X | CN 116055015 A (VIVO SOFTWARE TECHNOLOGY CO., LTD.) 02 May 2023 (2023-05-02)<br>description, paragraphs 187-224 | 1-43 |
| X | WO 2023030228 A1 (VIVO MOBILE COMMUNICATION CO., LTD.) 09 March 2023 (2023-03-09)<br>description, paragraphs 214-303 | 1-43 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 April 2024** | **09 April 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/107088** |

**C.    DOCUMENTS CONSIDERED TO BE RELEVANT**

| Category* | Citation of document, with indication, where appropriate, of the relevant passages | Relevant to claim No. |
|---|---|---|
| X | WO 2023088298 A1 (VIVO MOBILE COMMUNICATION CO., LTD.) 25 May 2023 (2023-05-25)<br>    description, paragraphs 76-106 | 1-43 |
| X | WO 2023092269 A1 (GUANGDONG OPPO MOBILE TELECOMMUNICATIONS CORP., LTD.) 01 June 2023 (2023-06-01)<br>    description, paragraphs 57-107 | 1-43 |

Form PCT/ISA/210 (second sheet) (July 2022)

# EP 4 746 326 A1

## INTERNATIONAL SEARCH REPORT
### Information on patent family members

International application No.

**PCT/CN2023/107088**

| Patent document cited in search report | | | Publication date (day/month/year) | Patent family member(s) | | | Publication date (day/month/year) |
|---|---|---|---|---|---|---|---|
| CN | 115150769 | A | 04 October 2022 | WO | 2022206844 | A1 | 06 October 2022 |
| CN | 115696365 | A | 03 February 2023 | WO | 2023001184 | A1 | 26 January 2023 |
| CN | 115696369 | A | 03 February 2023 | WO | 2023001269 | A1 | 03 February 2023 |
| CN | 116055015 | A | 02 May 2023 | WO | 2023071931 | A1 | 04 May 2023 |
| WO | 2023030228 | A1 | 09 March 2023 | CN | 115733565 | A | 03 March 2023 |
| WO | 2023088298 | A1 | 25 May 2023 | CN | 116156605 | A | 23 May 2023 |
| WO | 2023092269 | A1 | 01 June 2023 | None | | | |

Form PCT/ISA/210 (patent family annex) (July 2022)